# EUROPEAN PATENT APPLICATION

(11) **EP 1 884 917 A2**
(43) Date of publication of application: **06.02.2008**
(21) Application number: 07014961.2
(22) Date of filing: 31.07.2007
(51) Int. Cl.: G09G 3/36

(54) **Gate-on voltage generation circuit, gate-off voltage generation circuit, and liquid crystal display device having the same**

(30) Priority: 01.08.2006 KR 20060072611
(71) Applicant: Samsung Electronics Co., Ltd., Yeongtong-gu Suwon-city, Gyeonggi-do 442-742 (KR)
(72) Inventor: Woo, Doo Hyung, Anyang-si Geyonggi-do (KR); Park, Kee Chan, Anyang-si Geyonggi-do (KR); Kim, Chi Woo, Seocho-gu Seoul (KR); Yhee, Shang Min, Seoul (KR); Zhangzhifeng, Yongin-si Gyeonggi-do (KR); Park, Seong II, Gwanak-gu Seoul (KR)
(74) Representative: Dr. Weitzel & Partner

(57) **Abstract**

A gate-on voltage generation circuit, a gate-off voltage generation circuit, and a liquid crystal display (LCD) using the same are provided. The gate-on voltage generation circuit includes a first capacitor charged with a first control signal and a first reference voltage to output a first charging voltage through a first output node according to the first control signal. A second capacitor is charged with a second control signal and the first reference voltage to output a second charging voltage according to the second control signal. A first switching device is connected between the first capacitor and the first output node to selectively output the first charging voltage to the first output node. A second switching device is turned on by the second charging voltage to supply the first reference voltage to the first capacitor, the first and second switching devices being exclusively turned on and off. A third switching device is turned on by the first charging voltage to supply the first reference voltage to the second capacitor. The third switching device turns on the first switching device and at the same time turns off the second switching device by supplying the first reference voltage to the first and second switching devices.

## Description

### CROSS REFERENCE TO RELATED APPLICATIONS

This application claims priority to Korean Patent Application No. 10-2006-72611 filed on August 1, 2006 and all the benefits accruing therefrom under 35 U.S.C. §119, and the contents of which in its entirety are herein incorporated by reference.

### BACKGROUND OF THE INVENTION

### Field of the Invention

The present invention relates to a gate-on voltage generation circuit, a gate-off voltage generation circuit, and a liquid crystal display (LCD) device having the same. More particularly, the present invention relates to a gate-on voltage generation circuit, a gate-off voltage generation circuit, and an LCD device having the same which are capable of stabilizing a gate-on voltage and a gate-off voltage and improving manufacturing yield by integrating the gate-on and gate-off voltage generation circuits onto an LCD panel.

### Description of the Related Art

Typically, an LCD device includes an LCD panel for displaying images through a matrix of liquid crystal cells, a backlight assembly for illuminating the LCD panel, and a panel driving circuit for driving the LCD panel. The LCD panel displays an image on a screen by varying light transmittance of a liquid crystal according to voltages charging the respective liquid crystal cells. The LCD device is widely applied to many fields ranging from small-sized devices to large-sized devices, such as mobile communication terminals, notebook computers, and LCD televisions.

The panel driving circuit includes a gate driver for supplying scanning signals to a plurality of gate lines of the LCD panel, a data driver for supplying data signals corresponding to a brightness value of video data synchronized with the scanning signals to a plurality of data lines of the LCD panel, a timing controller for providing control signals to the gate driver and the data driver and providing video signals to the data driver, and a power source for supplying a voltage to the gate and data drivers and the timing controller.

The gate driver sequentially supplies a gate-on voltage and a gate-off voltage to the gate lines. The data driver sequentially supplies the video signals provided from the timing controller to sub-pixels of the liquid crystal cells when the gate-on voltage is supplied from the gate driver such that an image is presented on the LCD panel.

The power source supplies the gate-on voltage and the gate-off voltage to the gate driver and supplies an analog voltage to the data driver. Typically, the power source is separately built on a printed circuit board.

However, the conventional LCD requires a power source implemented with a very complicated circuit for generating a high voltage, resulting in increase of whole manufacturing cost.

### SUMMARY OF THE INVENTION

The present invention is directed to providing an LCD device with a stabilized gate-on voltage and gate-off voltage, and improving manufacturing yield by integrating a gate-on voltage generation circuit and a gate-off voltage generation circuit on an LCD panel.

In an exemplary embodiment of the present invention, a gate-on voltage generation circuit of a liquid crystal display is provided including a first capacitor charged with a first control signal and a first reference voltage to output a first charging voltage through a first output node according to the first control signal, a second capacitor charged with a second control signal and the first reference voltage to output a second charging voltage according to the second control signal, a first switching device interconnected between the first capacitor and the first output node to selectively output the first charging voltage to the first output node, a second switching device which is turned on by the second charging voltage to supply the first reference voltage to the first capacitor, the first and second switching devices being exclusively turned on and off, and a third switching device which is turned on by the first charging voltage to supply the first reference voltage to the second capacitor and turns on the first switching device and at the same time turns off the second switching device by supplying the first reference voltage to the first and second switching devices.

In some embodiments, the first switching device is a P-type transistor.

In some embodiments, the second and third switching devices are N-type transistors.

In some embodiments, the second switching device is turned off by the first reference voltage applied to a gate electrode while the first charging voltage is output.

In some embodiments, the first charging voltage is output by stepping up above the first reference voltage.

In another exemplary embodiment of the present invention, a gate-off voltage generation circuit is provided including a third capacitor charged with a first control signal and a second reference voltage to output a third charging voltage through a second output node according to the first control signal, a fourth capacitor which is charged with a second control signal and the second reference voltage to output a fourth charging voltage according to the second control signal, a fourth switching device connected between the third capacitor and the second output node to selectively output the third charging voltage to the second output node, a fifth switching device which is turned on by the fourth charging voltage to supply the second reference voltage to the third capacitor, the fourth and fifth switching devices being exclusively turned on and off, and a sixth switching device which is turned on by the third charging voltage to supply the second reference voltage to the fourth capacitor and turns on the fourth switching device and at the same time turns off the fifth switching device by supplying the second reference voltage to the fourth and fifth switching devices.

In some embodiments, the fourth switching device is an N-type transistor.

In some embodiments, the fifth and sixth switching devices are P-type transistors.

In some embodiments, the fifth switching device is turned off by the second reference voltage applied to a gate electrode while the third charging voltage' is output.

In some embodiments, the third charging voltage is output by stepping down below the second reference voltage.

In yet another exemplary embodiment of the present invention, a liquid crystal display device is provided which includes a liquid crystal display panel for displaying an image, a gate driver circuit formed on the liquid crystal display panel, for driving gate lines of the liquid crystal display panel, a data driver formed on the liquid crystal display panel, for driving data lines of the liquid crystal display panel, a timing controller for providing control signals to the gate driver and the data driver and providing video signals to the data driver, the above-descried gate-on voltage generation circuit formed integrally on the liquid display panel, and a power source for providing the first reference voltage to the gate-on voltage generation circuit.

In an exemplary embodiment of the present invention, the above and other objects can be accomplished by a liquid crystal display device including a liquid crystal display panel for displaying an image, a gate driver circuit formed on the liquid crystal display panel, for driving gate lines of the liquid crystal display panel, a data driver formed on the liquid crystal display panel, for driving data lines of the liquid crystal display panel, a timing controller for providing control signals to the gate driver and the data driver and providing video signals to the data driver, the above-described gate-off voltage generation circuit formed integrally on the liquid crystal display panel, and a power source for providing the second reference voltage to the gate-off voltage generation circuit.

In an exemplary embodiment of the present invention, the above and other objects can be accomplished by a liquid crystal display device including a liquid crystal display panel for displaying an image, a gate driver circuit formed on the liquid crystal display panel, for driving gate lines of the liquid crystal display panel, a data driver formed on the liquid crystal display panel, for driving data lines of the liquid crystal display panel, a timing controller for providing control signals to the gate driver and the data driver and providing video signals to the data driver, the above-described gate-on voltage generation circuit formed integrally on the liquid crystal display panel, the above-described gate-off voltage generation circuit formed integrally on the liquid crystal display panel, a power source for providing the first reference voltage and the second reference voltage to the gate-on voltage generation circuit and the gate-off voltage generation circuit, respectively.

### BRIEF DESCRIPTION OF THE DRAWINGS

The above and other features and advantages of the present invention will become readily apparent by reference to the following detailed description when considered in conjunction with the accompanying drawings, in which:
FIG. 1 is a schematic block diagram illustrating an LCD device according to an exemplary embodiment of the present invention;
FIG. 2 is a circuit diagram illustrating a gate-on voltage generation circuit of a gate voltage generator of FIG. 1;
FIG. 3 illustrates the voltage waveforms of CKB and CK as well as the voltages at nodes A and B of the gate-on voltage generation circuit of FIG. 2;
FIG. 4 is a graph organizing output voltage levels in accordance with turn-on currents of the TFT transistors of the gate-on voltage generation circuit of FIG. 2;
FIG. 5 is a graph illustrating variations of output voltages versus output currents of the TFT transistors of the gate-on voltage generation circuit of FIG. 2;
FIG. 6 is a circuit diagram illustrating a gate-off voltage generation circuit of the gate voltage generator of FIG. 1; and
FIG. 7 is a graph illustrating voltage waveforms of CKB and CK as well as waveforms at nodes C and D of the gate-off voltage generation circuit of FIG. 6.

### DETAILED DESCRIPTION OF EXEMPLARY EMBODIMENTS

Exemplary embodiments of the present invention are described with reference to the accompanying drawings in detail. The same reference numbers will be used throughout the drawings to refer to the same or like parts. Detailed descriptions of well-known functions and structures incorporated herein may be omitted to avoid obscuring the subject matter of the present invention.

While the present invention is susceptible of embodiment in many different forms, there are shown in drawings and will be described herein in detail specific embodiments thereof, with the understanding that the present disclosure is to be considered as an exemplification of the principles of the invention and is not intended to limit the invention to the specific embodiments illustrated.

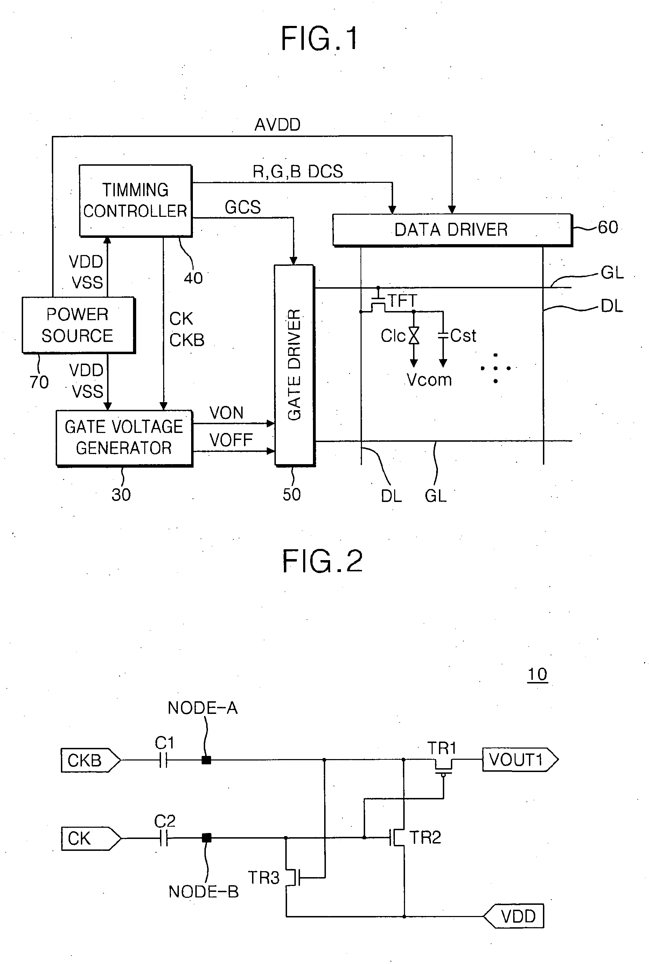

FIG. 1 is a schematic block diagram illustrating an LCD device according to an exemplary embodiment of the present invention.

Referring to FIG. 1, the LCD device according to an exemplary embodiment of the present invention includes an LCD panel having a plurality of gate lines GL and a plurality of data lines DL crossing the gate lines GL, a gate driver 50 for supplying scanning signals to the gate lines GL, a data driver 60 for supplying data signals to data lines DL, a gate voltage generator 30 which is integrated on the LCD panel and supplies a gate-on voltage VON and a gate-off voltage VOFF to the gate driver 50, a timing controller 40 for supplying gate control signals to the gate driver 50 and supplying pixel control signals and data control signals to the data driver 60, and a power source 70 for supplying voltages to the data driver 60, the timing controller 40, and the gate voltage generator 30.

The LCD panel includes a thin film transistor (TFT) substrate (not shown) having a TFT array, a color filter substrate (not shown) opposing to the TFT substrate, and a liquid crystal layer (not shown) sandwiched and held between the TFT substrate and the color filter substrate.

The color filter substrate includes a black matrix for protecting light leakage, a color filter array for expressing colors, and a common electrode for applying a common voltage to the liquid crystal layer. The liquid crystal layer is driven by a voltage difference between a pixel electrode to which a data signal is supplied and the common electrode to which a common voltage serving as a reference voltage is supplied. Liquid crystal molecules rotate according to the voltage difference so as to alter the transmittance of an incident light.

The TFT substrate includes a plurality of gate lines GL and a plurality of data lines DL crossing the gate lines GL, a plurality of pixel regions defined by the gate lines GL and the data lines DL, a plurality of TFTs each connected to a gate line GL and a data line DL, and a plurality pixel electrodes each connected to the TFT.

The gate driver 50 sequentially supplies the gate-on voltage VON and the gate-off voltage VOFF to the gate line GL. The gate driver 50 is integrally formed on the TFT substrate. That is, the gate driver 50 is formed as such a shift register of a plurality of TFTs connected in series and parallel by using polysilicon TFTs while TFTs are formed in a display region of the TFT substrate. The gate driver 50 sequentially supplies the gate-on voltage VON and the gate-off voltage VOFF supplied from the gate voltage generator 30 to the gate lines GL in response to the gate control signal GCS supplied from the timing controller 40.

The data driver 60 converts digital data into analog data signals and provides the data signals to the data lines DL whenever the gate-on voltage VON is supplied to the gate line GL, in response to the control signals from the timing controller 40. The data driver 60 includes a shift register, a latch, a digital-to-analog converter, and an output buffer. The shift register sequentially shifts a data start pulse D_STV from the timing controller 40 according to a data shift clock D_CPV so as to generate a sampling control signal. The latch sequentially latches the data input from the timing controller 40 and outputs, when a horizontal line of data is latched, the latched data to the digital-to-analog converter at the same time, in response to the sampling control signal. The digital-to-analog converter selects one of a plurality of gamma voltages corresponding to the data from the latch and outputs the selected gamma voltage as the analog data signal to the output buffer. The output buffer supplies the data signal from the digital-to-analog converter to the data line DL. The data driver 60 may be connected to the TFT as a separate chip or may be directly mounted on the TFT substrate.

The timing controller 40 arranges red (R), green (G), and blue (B) pixel data signals input from outside and supplies the arranged pixel data signals to the data driver 60. The timing controller 40 generates the control signals for controlling the driving timings of the gate driver 50 and the data driver 60 on the basis of a plurality of synchronization signals such as a dot clock (DCLK), a data enable signal (DE), a vertical synchronization signal (VSYC), and a horizontal synchronization signal (HSYC). The synchronization signals are input from outside together with the pixel data signals. For example, the timing controller 40 generates control signals including a gate start pulse (STV), a gate shift clock (CPV), and an output control signal (OE), and outputs the control signals to the gate driver 50. The timing controller 40 supplies the data control signals including a data start pulse (D_STV), a data shift clock (D_CPV), and a polarity control signal (POL), and supplies the control signals to the data driver 60. The timing controller 40 supplies a clock signal CK and an inverted clock signal CKB to the gate voltage generator 30 which generates the gate-on voltage VON and the gate-off voltage VOFF. The clock signal CK and inverted clock signal CKB are alternately output according to a first reference voltage VDD and a second reference voltage VSS supplied by the power source 70.

The power source 70 supplies the first and second reference voltages VDD and VSS, respectively, to the gate voltage generator 30 and supplies an analog voltage AVDD to the data driver 60. The power source 70 generates reference voltages for driving the timing controller 40. The power source 70 generates 5V and 0V DC voltages as the first and second reference voltages. VDD and VSS for the gate voltage generator 30. For example, the first reference voltage VDD of 5V and the second reference voltage VSS of 0V are supplied to the timing controller 40 and the gate voltage generator 30.

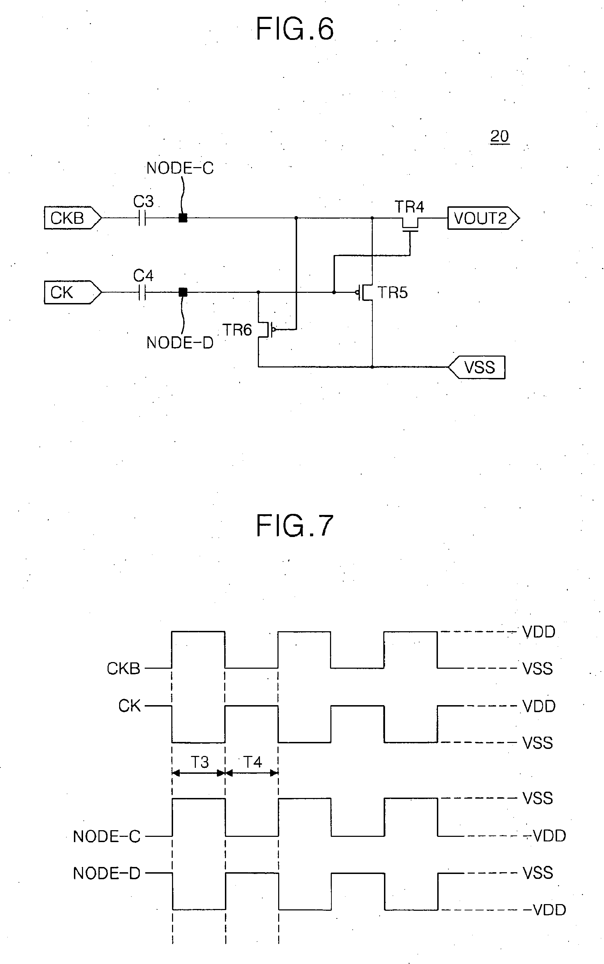

The gate voltage generator 30 includes a gate-on voltage generation circuit 10 for generating the gate-on voltage VON on the basis of the first reference voltage VDD as shown in FIG. 2; and a gate-off voltage generation circuit 20 for generating the gate-off voltage VOFF on the basis of the second reference voltage VSS as shown in FIG. 6. The gate voltage generator 30 is integrally formed on a non-display region of the TFT substrate together with the gate driver 50.

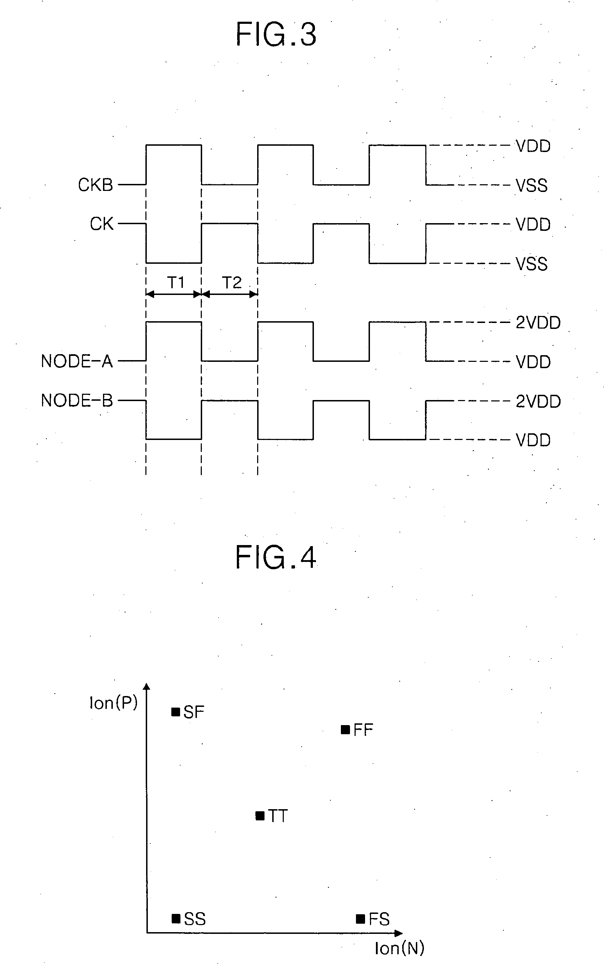

FIG. 2 is a circuit diagram illustrating the gate-on voltage generation circuit 10 of the gate voltage generator 30 of FIG. 1, and FIG. 3 illustrates the voltage waveforms of CKB and CK as well as the voltages at nodes A and B of the gate-on voltage generation circuit 10 of FIG. 2.

Referring to FIGS. 2 and 3, a first capacitor C1 is charged with a first control signal CKB and the first reference voltage VDD via transistor TR2 and outputs a first charging voltage to a first output node VOUT1. A second capacitor C2 is charged with a second control signal CK and the first reference voltage VDD via transistor TR3, and outputs a second charging voltage. A first switching device TR1 arranged between the first capacitor C1 and the first output node VOUT1 selectively outputs the first charging voltage to the first output node VOUT1 according to the first reference voltage VDD and the second charging voltage. A second switching device TR2 is turned on by the second charging voltage and provides the first reference voltage VDD to the first capacitor C1. The first and second switching devices TR1 and TR2 are exclusively turned on and off. A third switching device TR3 has its gate connected to NODE-A and is turned on when CKB is high, as shown in time period T1 in FIG. 3 and provides the first reference voltage VDD to the second capacitor C2. When voltage CK is at the level VSS during time period T1, switching device TR1 is turned on and second switching device TR2 is turned off. The first to third switching devices TR1, TR2, and TR3 may be implemented as polysilicon TFTs integrally formed on the TFT substrate of the LCD panel.

In more detail, the first capacitor C1 is charged with the first control signal CKB, i.e. the inverted clock signal CKB supplied from the timing controller 40, and the first reference voltage VDD supplied from the power source 70, and discharges a voltage, i.e. the first charging voltage, obtained by summing a high level voltage VDD of the charged inverted clock signal and the first reference voltage VDD and supplies the first charging voltage to a source electrode of the first transistor TR1. The first charging voltage which is applied to the source.of first switching device TR1 is obtained by adding the first reference voltage VDD which is provided C1 via second switching device TR2 to the inverted clock signal CKB. One node (NODE-A) of the first capacitor C1 is connected to one node of the timing controller 40 and the other node of the first capacitor C1 is commonly connected to the source electrode of the first transistor TR1, a gate electrode of the third transistor TR3, and a source electrode of the second transistor TR2.

The second capacitor C2 is charged with the clock signal CK supplied from the timing controller 40 and the first reference voltage VDD supplied from the power source 70 via third transistor TR3 during time period T1 so as to supply the second charging voltage obtained by summing the high level voltage VDD of the clock signal CK and the first reference voltage VDD, resulting in a voltage stepped 2VDD. The second charging voltage is twice the first reference voltage VDD and is identical to the first charging voltage. One node of the second capacitor C2 is connected to one node of the timing controller 40 and the other node (NODE-B) is commonly connected to a gate electrode of the first transistor TR1, the gate electrode of the second transistor TR2, and the drain electrode of the third transistor TR3.

The first transistor TR1 controls an output timing of the first charging voltage output from the first capacitor C1, i.e. the gate-on voltage VON. The gate electrode of the first transistor TR1 and the gate electrode of the second transistor TR2 are commonly connected to the node B. The source electrode of the first transistor TR1 is connected to the first capacitor C1. A drain electrode of the first transistor TR1 is connected to the first output node VOUT1. The first transistor TR1 is formed as a P-type TFT doped with a P-type impurity.

The second transistor TR2 is turned on according to the second charging voltage supplied from the second capacitor C2 and provides the first reference voltage VDD to the first capacitor C1. The second transistor TR2 is turned off according to the first reference voltage VDD supplied when the third transistor TR3 is turned on such that it is possible to prevent the first charging voltage from flowing back to the power source 70 when the first transistor TR1 supplies the first charging voltage to the first output node VOUT1. For this purpose, the gate electrode of the second transistor TR2 is connected to one end of the second capacitor C2 and the drain electrode of the third transistor TR3. A source electrode of the second transistor TR2 is connected to the power source 70 supplying the first reference voltage VDD, and a drain electrode of the second transistor TR2 is connected to one end of the first capacitor C1. The second transistor TR2 is formed as an N-type TFT doped with an N-type impurity.

The third transistor TR3 is turned on in response to the first charging voltage and supplies the first reference voltage VDD to the first and second transistors TR1 and TR2 at the same time. Accordingly, the first transistor TR1 is turned on so as to supply the first charging voltage to the first output node VOUT1, and turns off the second transistor TR2. A gate electrode of the third transistor TR3 is connected to one node of the first capacitor C1. A source electrode of the third transistor TR3 is connected to the power source 70 supplying the first reference voltage VDD, and the drain electrode of the third transistor TR3 is commonly connected to the gate electrodes of the first and second transistors TR1 and TR2.

In order for the third transistor TR3 to be turned on using the first charging voltage, the third transistor TR3 is implemented as an N-type TFT identical to the second transistor TR2. The turn-on voltage of the second transistor TR2, i.e. the offset value of the second transistor TR2 can be uniformly maintained using the first reference voltage VDD supplied by the third transistor TR3. Since the offset of the second transistor TR2 is regularly maintained by the first reference voltage VDD supplied from the third transistor TR3, it is possible to prevent the second transistor TR2 from being abnormally turned on when the first charging voltage is supplied to the first output node VOUT1. Accordingly, it is possible to prevent the first charging voltage from being supplied to the second transistor TR2.

Referring to FIG. 3, when the first charging voltage charged at the first capacitor C1 is supplied to the node A during T1, the third transistor TR3 connected to the node A is turned on. When the third transistor TR3 is turned on, the first reference voltage VDD connected to the source electrode of the third transistor TR3 is supplied to the gate electrodes of the first and second transistors TR1 and TR2. The first transistor TR1 is turned on by the first reference voltage VDD and the second transistor TR2 is turned off at the same time. Accordingly, the first charging voltage is output to the first output node VOUT1 through the first transistor TR1. At this time, the second capacitor C2 is charged with the first reference voltage VDD via transistor TR3.

In the mean time, when the second charging voltage is supplied through the node B during T2, the second transistor TR2 is turned on the first transistor TR1 is turned off and third transistor TR3 is also turned off. Accordingly, the first reference voltage VDD is supplied and charged to the first capacitor C1 through the second transistor TR2.

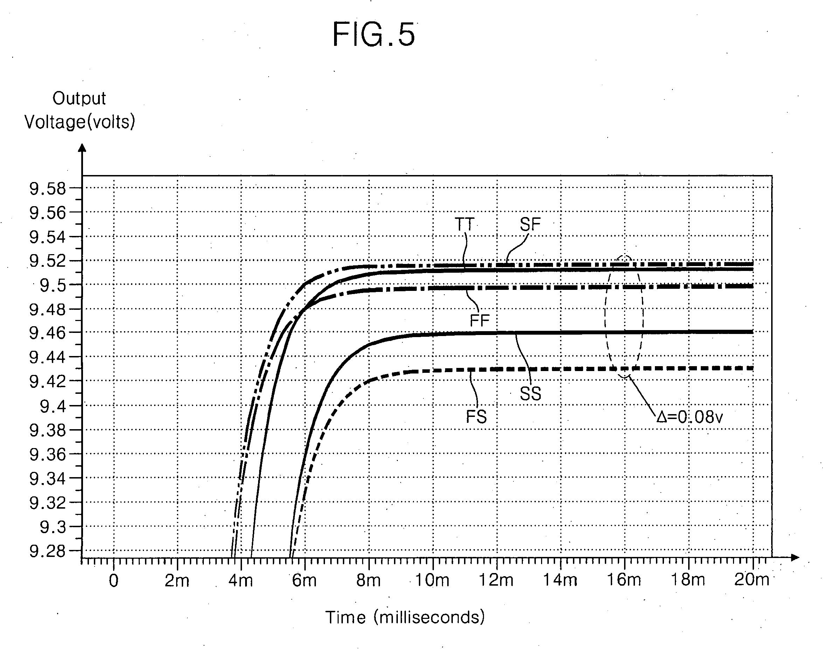

FIG. 5 is a graph illustrating variations of output voltages versus output currents of the TFTs of the gate-on voltage generation circuit according to an exemplary embodiment of the present invention.

Since the first to third transistors TR1, TR2, and TR3 are integrally fabricated simultaneously, it is required to measure switching times and output voltages of the N-type and P-type TFTs. The output characteristics of the respective transistors are tested by measuring the output voltages according to turn-on and turn-off times of the N-type and P-type TFTs.

FIG. 4 is a graph organizing output voltage levels in accordance with turn-on currents of the TFTs of the gate-on voltage generation circuit according an exemplary embodiment.

In the gate-on voltage generation circuit according to an exemplary embodiment of the present invention, the output voltages at the output node are measured according to the operation speed of the N-type and P-type transistors. In FIG. 4, FF refers to the output voltage when both the N-type transistor turn-on current lon(N) and the P-type transistor turn-on current lon(P) are high, FS refers to the output voltage when the N-type transistor turn-on current lon(N) is high and the P-type transistor turn-on current lon(P) is low, SF refers to the output voltage when N-type transistor turn-on current lon(N) is low and the P-type transistor turn-on current lon(P) is high, TT refers to the output voltage when both the N-type transistor turn-on current lon(N) and the P-type transistor turn-on current lon(P) are intermediate, and SS refers to the output voltage when both the N-type transistor turn-on current lon(N) and the P-type transistor turn-on current lon(P) are low. The output voltages for the respective cases are illustrated in FIG. 5.

For example, when the first reference voltage VDD of 5.3V with a frequency of 12 KHz is supplied, the output voltage is 9.43V (lowest level) in the case of FS and 9.51V (highest level) in the case of SF, according to a corner test. A deviation of the voltage levels is about 0.08V as shown in FIG. 5. Accordingly, the output voltage of the gate-on voltage generation circuit is stable.

FIG. 6 is a circuit diagram illustrating the gate-off voltage generation circuit 20 of the gate voltage generator 30 of FIG. 1, and FIG. 7 illustrates voltage waveforms of CKB and CK as well as the voltages at nodes C and D of the gate-off voltage generation circuit 30 of FIG. 6.

Referring to FIGS. 6 and 7, a third capacitor C3 is charged with the first control signal CKB and the second reference voltage VSS via transistor TR5 and outputs a third charging voltage to a second output node VOUT2. A fourth capacitor C4 is charged with the second control signal CK and the second reference voltage VSS via transistor TR6 and outputs a fourth charging voltage. A fourth switching device TR4 interposed between the third capacitor C3 and the second output node VOUT2 selectively outputs the third charging voltage to the second output node VOUT2. A fifth switching device TR5 is turned on by the fourth charging voltage and supplies the second reference voltage VSS to the third capacitor C3 via transistor TR5. The fourth and fifth switching devices are exclusively turned on and off. A sixth switching device TR6 is turned on by the fourth charging voltage and supplies the second reference voltage VSS to the fourth capacitor C4 via transistor TR6. The sixth switching device TR6 turns on the fourth switching device TR4 and turns off the fifth switching device TR5 by supplying the second reference voltage VSS to the fourth and fifth switching devices TR4 and TR5. The fourth to sixth switching devices TR4, TR5, and TR6 are integrally formed on the TFT substrate of the LCD panel as polysilicon TFTs.

In more detail, the third capacitor C3 is charged with the first control signal CKB (i.e. the inverted clock signal) supplied from the timing controller 40 and the second reference voltage VSS supplied from the power source 70, and discharges a voltage, i.e. the third charging voltage, obtained by inverting a high level voltage VDD of the charged reverse clock signal CKB to a source electrode of the fourth transistor TR4. One node of the third capacitor C3 is connected to one node of the timing controller 40. The other node of the third capacitor C3 is commonly connected with the source electrode of the fourth transistor TR4, a drain electrode of the fifth transistor TR5, and a gate electrode of the sixth transistor TR6.

The fourth capacitor C4 is charged with the second control signal CK supplied from the timing controller 40 and the second reference voltage VSS supplied from the power source 70 so as to supply the fourth charging voltage obtained by inverting the high level voltage of the second control signal CK. One node of the fourth capacitor C4 is connected to one node of the timing controller 40. The other node of the fourth capacitor C4 is commonly connected to gate electrodes of the fourth and fifth transistors TR4 and TR5 and a drain electrode of the sixth transistor TR6.

The fourth transistor TR4 controls output of the third charging voltage output from the third capacitor C3, i.e. the gate-off voltage VOFF. The gate electrodes of the fourth and fifth transistors TR4 and TR5 are commonly connected to the node D. The source electrode of the fourth transistor TR4 is connected to the third capacitor C3, and a drain electrode of the fourth transistor TR4 is connected to the second output node VOUT2.

The fourth transistor TR4 is formed as an N-type TFT doped with an N-type impurity, and the fifth transistor TR5 is formed as a P-type TFT doped with a P-type impurity.

The fifth transistor TR5 is turned on by the fourth charging voltage supplied from the fourth capacitor C4 to supply the second reference voltage VSS to the third capacitor C3. The fifth transistor TR5 is turned off by the second reference voltage VSS supplied when the sixth transistor TR6 is turned on such that it is possible to prevent the third charging voltage from flowing back to the power source 70 when the fourth transistor TR4 supplies the third charging voltage to the second output node VOUT2. The gate electrode of the fifth transistor TR5 is connected to one end of the fourth capacitor C4 and the drain electrode of the sixth transistor TR6. A source electrode of the fifth transistor TR5 is connected to voltage VSS from power source 70 and the drain electrode of the fifth transistor TR5 is connected to one end of the third capacitor C3.

The sixth transistor TR6 is turned on in response to the third charging voltage and supplies the second reference voltage VSS to the fourth and fifth transistors TR4 and TR5. Accordingly, the fourth transistor TR4 is turned on to output the third charging voltage to the second output node VOUT2 and the fifth transistor TR5 is turned off. The gate electrode of the sixth transistor TR6 is connected to one node of the third capacitor C3. A source electrode of the sixth transistor TR6 is connected to the power source 70 supplying the second reference voltage VSS, and the drain electrode of the sixth transistor TR6 is commonly connected to the gate electrodes of the fourth and fifth transistors TR4 and TR5. The sixth transistor TR6 is implemented as a P-type TFT identical to the fifth transistor TR5 so as to be turned on by the third charging voltage. The sixth transistor TR6 can maintain the turn-on voltage of the fifth transistor TR5, i.e. the offset value of the fifth transistor TR5 at the second reference voltage VSS. Since the offset of the fifth transistor TR5 is regularly maintained by the second reference voltage VSS supplied from the sixth transistor TR6, it is possible to prevent the fifth transistor TR5 from being abnormally turned on when the third charging voltage is supplied to the second output node VOUT2. Accordingly, it is possible to prevent the third charging voltage from flowing to the fifth transistor TR5.

Referring to FIG. 7, when the second reference voltage VSS is measured at node C during T3, the sixth transistor TR6 is turned off. At the same time, the second reference voltage VSS charged on the basis of the second control signal CK is output through the Node D so as to turn on the fifth transistor TR5. Accordingly, the fourth transistor TR4 is turned off so that the second reference voltage VSS is charged to the third capacitor C3. Next, the third capacitor C3 is charged with the reference voltage VDD according to the first control signal CKB during T4 such that the sixth transistor TR6 is turned on to supply the second reference voltage VSS to the fourth and fifth transistors TR4 and TR5. Accordingly, the fourth transistor TR4 is turned on to output a voltage obtained by inverting the charged voltage, i.e. -VDD to the second output node VOUT2 and to turn on the fifth transistor TR5 at the same time.

When the first reference voltage VDD is 5V and the second reference voltage is 0V, the first charging voltage supplied to the gate-on voltage generation circuit 10 becomes stepped up to 10V, which is supplied to the gate driver 50 through the first output node VOUT1. In this case, the gate-off voltage generation circuit 20 outputs the third charging voltage stepped down to -5V to the second output node VOUT2.

As describe above, the LCD device of the present invention is provided with a gate-on voltage generation circuit and a gate-off voltage generation circuit implemented with minimal number of TFTs on a TFT substrate, whereby it is possible to reduce a complexity of a power supply mechanism and to reduce the whole manufacturing cost.

Also, since the LCD device of the present invention regulates the output voltage levels of the gate-on and gate-off voltages using the gate-on voltage generation circuit and the gate-off voltage generation circuit, it is possible to provide stable gate-on and gate-off voltages and to reduce the power consumption.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. A gate-on voltage generation circuit for providing a gate-on voltage to an output terminal, the circuit comprising:
a first capacitor charged with a first control signal and a first reference voltage to output a first charging voltage through a first output node according to the first control signal;
a second capacitor charged with a second control signal and the first reference voltage to output a second charging voltage according to the second control signal;
a first switching device connected between the first capacitor and the first output node to selectively output the first charging voltage to the first output node;
a second switching device which is turned on by the second charging voltage to supply the first reference voltage to the first capacitor, the first and second switching devices being exclusively capacitor, the first and second switching devices being exclusively turned on and off; and
a third switching device which is turned on by the first charging voltage to supply the first reference voltage to the second capacitor and turns on the first switching device and at the same time turns off the second switching device by supplying the first reference voltage to the first and second switching devices.

2. The gate-on voltage generation circuit of claim 1, wherein the first switching device is a P-type transistor.

3. The gate-on voltage generation circuit of claim 1, wherein the second and third switching devices are N-type transistors.

4. The gate-on voltage generation circuit of claim 1, wherein the second switching device is turned off by the first reference voltage applied to a gate electrode while the first charging voltage is output.

5. The gate-on voltage generation circuit of claim 1, wherein the first charging voltage is output by stepping up above the first reference voltage.

6. A gate-off voltage generation circuit for providing a gate-off voltage to an output terminal, the circuit comprising:
a third capacitor charged with a first control signal and a second reference voltage to output a third charging voltage through a second output node according to the first control signal;
a fourth capacitor charged with a second control signal and the second reference voltage to output a fourth charging voltage according to the second control signal;
a fourth switching device connected between the third capacitor and the second output node to selectively output the third charging voltage to the second output node;
a fifth switching device which is turned on by the fourth charging voltage to supply the second reference voltage to the third capacitor, the fourth and fifth switching devices being exclusively turned on and off; and
a sixth switching device which is turned on by the third charging voltage to supply the second reference voltage to the fourth capacitor and turns on the fourth switching device and at the same time turns off the fifth switching device by supplying the second reference voltage to the fourth and fifth switching devices.

7. The gate-off voltage generation circuit of claim 6, wherein the fourth switching device is an N-type transistor.

8. The gate-off voltage generation circuit of claim 6, wherein the fifth and sixth switching devices are P-type transistors.

9. The gate-off voltage generation circuit of claim 6, wherein the fifth switching device is turned off by the second reference voltage applied to a gate electrode while the third charging voltage is output.

10. The gate-off voltage generation circuit of claim 6, wherein the third charging voltage is output by stepping down below the second reference voltage.

11. A liquid crystal display device comprising the gate-on voltage generation circuit of any of claims 1-5, and further comprising:
a liquid crystal display panel for displaying an image;
a gate driver formed on the liquid crystal display panel, for driving gate lines of the liquid crystal display panel;
a data driver formed on the liquid crystal display panel, for driving data lines of the liquid crystal display panel;
a timing controller for providing control signals to the gate driver and the data driver and providing video signals to the data driver; and
a power source for providing the first reference voltage to the gate-on voltage generation circuit;
wherein the gate-on voltage generation circuit is formed integrally on the liquid crystal display panel.

12. A liquid crystal display device comprising the gate-off voltage generation circuit according to any of claims 6-10 and further comprising:
a liquid crystal display panel for displaying an image;
a gate driver circuit formed on the liquid crystal display panel, for driving gate lines of the liquid crystal display panel;
a data driver formed on the liquid crystal display panel, for driving data lines of the liquid crystal display panel;
a timing controller for providing control signals to the gate driver and the data driver and providing video signals to the data driver; and
a power source for providing the second reference voltage to the gate-off voltage generation circuit;
wherein the gate-off voltage generation circuit is formed integrally on the liquid crystal display panel.

13. A liquid crystal display device comprising the gate-on voltage generation circuit of any of claims 1-5 and the gate-off voltage generation circuit according to any of claims 6-10 and further comprising:
a liquid crystal display panel for displaying an image;
a gate driver circuit formed on the liquid crystal display panel, for driving gate lines of the liquid crystal display panel;
a data driver formed on the liquid crystal display panel, for driving data lines of the liquid crystal display panel;
a timing controller for providing control signals to the gate driver and the data driver and providing video signals to the data driver; and
a power source for providing the first reference voltage and the second reference voltage to the gate-on voltage generation circuit and the gate-off voltage generation circuit, respectively;
wherein the gate-on voltage generation circuit and the gate-off voltage generation circuit are formed integrally on the liquid crystal display panel.
